(19) Europäisches Patentamt

European Patent Office

Office européen des brevets

(11) **EP 1 070 654 A2**

(12) **EUROPEAN PATENT APPLICATION**

(43) Date of publication:
24.01.2001 Bulletin 2001/04

(51) Int. Cl.⁷: **B62D 15/02**, G01L 5/22

(21) Application number: 00306140.5

(22) Date of filing: 19.07.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 23.07.1999 JP 20951799
22.09.1999 JP 26898199

(71) Applicant: **Macome Corporation**
**Kamiina-gun, Nagano Prefecture 399-4601 (JP)**

(72) Inventors:
• **Shimizu, Shigeziro,**
c/o Macome Corporation
**Kamiina-gun, Nagano Prefecture 399-4601 (JP)**
• **Ikegami, Satomi,**
c/o Macome Corporation
**Kamiina-gun, Nagano Prefecture 399-4601 (JP)**

(74) Representative:
**Hallybone, Huw George**
**CARPMAELS AND RANSFORD**
**43 Bloomsbury Square**
**London WC1A 2RA (GB)**

(54) **Non-contact type rotation angle and torque detection apparatus**

(57) The object of the present invention is to provide a rotation angle and torque detection apparatus capable of detecting a rotation angle and a torque in a non-contact manner and ensuring long life and stable detection even in a place having vibrations and in a high-temperature environment in which there are oil, water, dust or the like.

The rotation angle and torque detection apparatus includes a rotation angle detection inclined ring-shaped magnetizing body (6) to which the rotation of a shaft (1) is transmitted, a rotation angle detection sensor head section (7) for detecting the change of magnetic fluxes due to the rotation, cylindrical cam mechanisms (5) and (12) for converting a torsion of the shaft (1) into a linear displacement coincident with the direction of the rotation of the shaft (1), a torque detection ring-shaped magnetizing body (11) to which the displacement of a direct-acting follower (12) is transmitted, a detection sensor head section (10) for detecting the change of magnetic fluxes due to the displacement and a case (9) which houses the above-stated components altogether and into which the shaft (1) penetrates. Hence, it is possible to ensure stable detection and make the apparatus small in size and simple in structure.

*F I G. 1*

Input Side

Output Side

EP 1 070 654 A2

**Description**

BACKGROUND OF THE INVENTION

Field of the Invention

The present invention relates to a rotation angle and torque detection apparatus and is applicable to an apparatus for transmitting a steering force utilizing the rotation of a shaft in an automobile, a ship or the like.

Description of the Related Art

There is known, as a conventional rotation angle and torque detection sensor, a sensor made by a combination of three contact type potentiometers. In this rotation angle and torque detection sensor, two contact type potentiometers are used for rotation detection and one contact type potentiometer for torque detection. Specifically, a rotation detection signal is derived as a triangular wave and a torque detection signal is derived through a slip ring because the contact type potentiometer for torque detection rotates in itself.

In the above-stated conventional rotation angle and torque detection sensor, a contact type variable resistor is used in each contact type potentiometer. Thus, the conventional sensor has a disadvantage in that its service life is short due to the abrasion of contacts and lacks in reliability. In particular, it is inconveniently unsuited for use in a vibratile place like an apparatus for transmitting a steering force using the rotation of a shaft.

Furthermore, if dust or the like adheres to a contact portion, the detection characteristics of the sensor deteriorates. For this reason, the sensor should be housed in a case having excellent sealing structure so as to prevent dust and the like from entering the sensor. The need to add a case for this purpose disadvantageously pushes up cost.

SUMMARY OF THE INVENTION

It is, therefore, an object of the present invention to provide a rotation angle and torque detection apparatus capable of detecting a rotation angle and a torque in a non-contact manner, and ensuring long life and stable detection even in a vibratile place and also in a high-temperature environment in which there are oil, water, dust and the like.

To attain the above object, a rotation angle and torque detection apparatus according to the present invention comprises: a first ring-shaped magnetizing body to which a rotation of a measurement object portion is transmitted; a first magnetic detection means for detecting change of magnetic fluxes due to rotation of the first magnetizing body; a conversion mechanism for converting a torsion of the measurement object portion into a linear displacement coincident with the direction of a rotation axis of the measurement object portion; a second ring-shaped magnetizing body to which the displacement of the mechanism is transmitted; a second magnetic detection means for detecting change of magnetic fluxes due to a displacement of the second magnetizing body; and a cylindrical body for housing the first magnetizing body, the first magnetic detection means, the mechanism, the second magnetizing body and the second magnetic detection means altogether, the measurement object portion penetrating into the cylindrical body.

The rotation angle and torque detection apparatus according to the present invention functions as follows.

The rotation angle detection section of the first magnetic detection means consists of two differential type detection heads. Specifically, the rotation angle detection section consists of two differential type detector heads (1) and (2) each being positioned at 0 degree and 90 degrees with respect to the rotation central axis of the first magnetizing body, respectively. The first magnetizing body is of cylindrical shape having an inclined cut surface and magnetic fluxes thereof change like sine wave in the direction of the rotation axis of the shaft depending on the rotation.

The differential type detector head (1) has two detection elements (1) and (2) arranged at positions symmetrical about the center line of the first magnetizing body in the direction of the rotation axis of the shaft. Also, the differential type detection head (2) has two detection elements (1) and (2) arranged at positions symmetrical about the center line of the first magnetizing body in the direction of the rotation axis of the shaft.

When the first magnetizing body rotates about the rotation axis of the shaft, the phases of respective detection wave of the respective output voltages of the differential type detection heads (1) and (2) are shifted by 90 degrees and turned into sine wave with reference to the rotation angles.

Further, the torque detection section of the second magnetic detection means consists of one differential type detection head. The differential type detector head of the torque detection section has two detection elements (1) and (2) arranged at positions symmetrical about the center line of the second magnetizing body in the direction of the rotation axis of the shaft.

When the second magnetizing body moves right or left along the rotation axis of the shaft, the output voltage of the differential type detection head in response to the displacement changes linearly.

BRIEF DESCRIPTION OF THE DRAWINGS

FIG. 1 shows an example of the structure and installation of a rotation angle and torque detection sensor in one embodiment according to the present invention.

FIG. 2 is a top view seen in the direction of arrow A of FIG. 1 in the embodiment according to the present invention.

FIG. 3 shows the cross sections and the magnetized states of a differential type detector head having a combination of two detection elements and of a ring-shaped magnetizing body in the embodiment according to the present invention.

FIG. 4 shows a differential type detector head in a torque detection section in the embodiment according to the present invention wherein: FIG. 4A shows the magnetized directions and cross sections of a differential type detector head and of a ring-shaped magnetizing body; FIG. 4B is an output waveform diagram when the magnetizing body moves along the central axis of a shaft.

FIG. 5 shows a differential type detector head in a rotation angle detection section in the embodiment according to the present invention wherein: FIG. 5A shows the magnetized directions and cross sections of a differential type detector head and of an inclined ring-shaped magnetizing body; FIG. 5B is a side view showing the rotation directions of the differential type detector head and of the inclined ring-shaped magnetizing body; and FIG. 5C is an output waveform diagram when the magnetizing body moves along the central axis of a shaft.

FIG. 6 is a connection diagram of detection coils in the embodiment according to the present invention;

FIG. 7 is an explanatory diagram for a detector circuit in the embodiment according to the present invention;

FIG. 8 is an explanatory diagram for differential output in the embodiment according to the present invention; and

FIG. 9 is a block diagram of a sensor circuit in the embodiment according to the present invention.

## DETAILED DESCRIPTION OF THE PREFERRED EMBODIMENT

Now, the structure and operation of a rotation angle and torque detection apparatus as one embodiment according to the present invention will be described in detail, while appropriately referring to the accompanying drawings.

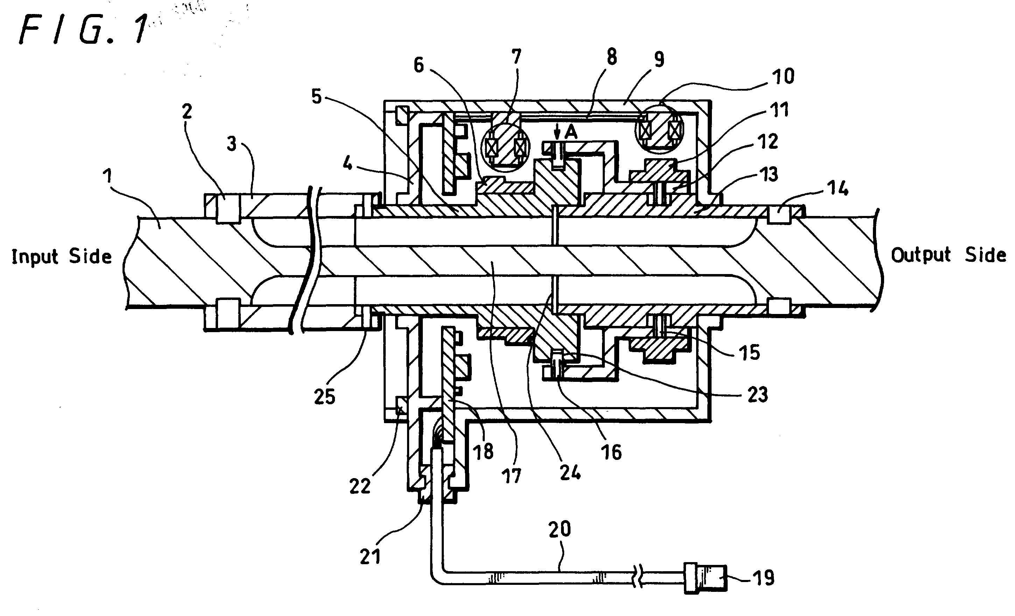

FIG. 1 shows the structure and installation example of a rotation angle and torque detection sensor in the embodiment according to the present invention.

[Description of Steering shaft]

A contracted torsion generation portion (measurement object portion) 17 is provided in a certain section of a steering shaft 1 (hereinafter referred to as "shaft") including the measurement object portion. The contracted torsion generation portion 17 is formed so that, if a torque is applied from the input side, the portion 17 may generate a torque according to the magnitude of a load connected to the output side.

In this embodiment, the shaft 1 is made of spring material and designed to generate a torsion proportional to the magnitude of a load. It is noted that the material of the shaft 1 is not limited to spring material and may be a viscous fluid as long as it is arranged so that a torsion proportional to the magnitude of a load may be generated.

[Structure and Function of Sensor Section]

The sensor section has a structure that a rotation angle detection sensor head section 7 and a torque detection sensor head section 10 are contained in a case (housing) 9 through a sensor head installation stay 8 and that the shaft 1 penetrates the case 9.

A rotation angle detection ring-shaped magnetizing body 6 is fixedly attached to a position opposite to a rotation angle detection sensor head section 7 on the outer periphery of a cylindrical cam 5. The shaft 1 is fixed to a coupling 3 through a detent pin 2. The coupling 3 is connected to the cylindrical cam 5 so as to transmit the torque of the shaft 1. If the length of the torsion generation portion 17 is short, the cylindrical cam 5 may be directly fixed to the shaft 1 without providing the coupling 3.

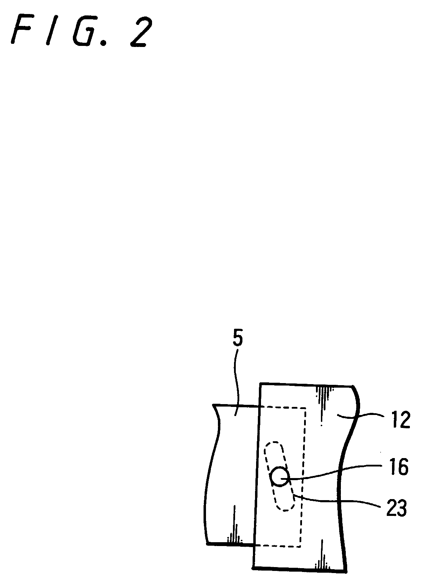

The cylindrical cam 5 abuts against a slide guide cylinder 13 on a contact surface having steps. This contact surface has a contraction absorbing gap 24 to absorb slight contraction due to the torsion of the shaft. This can prevent the cylindrical cam 5 and the slide guide cylinder 13 from closely attaching to each other so as not to make the movements of the cam 5 and the cylinder 13 difficult. A guide groove is provided on the outer periphery of the slide guide cylinder 13 in the axial direction. As shown in FIG. 2 which is a top view seen in the direction of arrow A of FIG. 1, a cam groove 23 is provided on the outer periphery of the cylindrical cam 5 in the vicinity of the contact surface between the cylindrical cam 5 and the slide guide cylinder 13. A torque detection ring-shaped magnetizing body 11 is fixedly attached to a direct-acting follower cylinder 12 at a position opposite to the torque detection sensor head 10. A guide pin 15 and a follower pin 16 are attached to the direct-acting follower cylinder 12 toward its inner periphery. The direct-acting follower cylinder 12 is formed so that the guide pin 15 slides in the guide groove of the guide cylinder 13 and thus moves only in the axial direction of the shaft 1.

The slide guide cylinder 13 is fixed to the shaft on the output side through a slide guide cylinder detent pin 14. In this way, the cylindrical cam 5 and the direct-acting follower 12 are arranged coaxially and can rotate with respect to each other.

As shown in FIG. 2 showing a top view seen in the direction of arrow A of FIG. 1, the tip end portion of the direct-acting follower cylinder 12, on which the follower pin 16 is provided, protrudes to hang over the cam groove 23 of the cylindrical cam 5. The follower pin 16 is fitted into the cam groove 23 of the cylindrical cam 5. If a torsion occurs in the torsion generation portion 17 of the shaft 1 to apply a torsion moment between the cylindrical cam 5 and the direct-acting follower cylinder 12, then the follower cylinder 12 moves in the axial direction.

The case 9 is shielded at the input-side opening thereof by a cap 4 and is fixed by a retaining ring 22. The detection output of the rotation angle detection sensor head section 7 and that of the torque detection sensor head section 10 are outputted, as predetermined electrical signals, through an input/output cable 20 and a connector 19 by a circuit board 18 forming a detector circuit. The cable 20 is fixed to the case 9 by means of a cable bush 21.

The rotation detection section is provided with the inclined ring-shaped magnetizing body 6 for changing with rotation of the shaft 1 the position of a magnetizing portion acting on the detection sensor head section 7 in axial direction and for making the locus thereof to form a sine wave. Now, the structure of the magnetizing body 6 will be described.

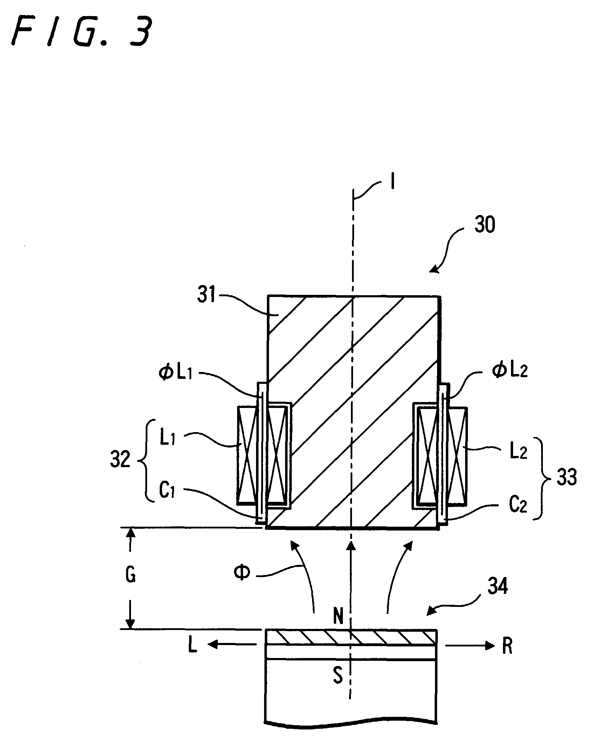

FIG. 3 shows the cross sections and magnetizing states of a differential detector head made by combining two detection elements and of the ring-shaped magnetizing body in this embodiment. The differential detector head 30 shown in FIG. 3 corresponds to the rotation angle detection sensor head section 7 and the torque detection sensor head section 10 in FIG. 1. The ring-shaped magnetizing body shown in FIG. 3 corresponds to the torque detection ring-shaped magnetizing body 6 and the torque detection ring-shaped magnetizing body 11 in FIG. 1.

In FIG. 3, the differential type detection head 30 is provided with two detection elements 32 and 33 on left (L) and right (R) end portions of a detection element installation section 31 in the axial direction at positions symmetrical about the center line of the magnetizing body in the rotation axis direction of the shaft, respectively. The detection element 32 consists of a detection coil L1 and a magnetic path C1 of a core. Magnetic fluxes ØL1 are generated on the magnetic path C1 by the coil L1. The detection element 33 also consists of a detection coil L2 and a magnetic path C2 of a core. Magnetic fluxes ØL2 are generated on the magnetic path C2 by the coil L2. The ring-shaped magnetizing body 34 may be provided opposite to the two detection elements 32 and 33 across a detection gap G and is magnetized so that the outer periphery of the body 34 may be an N pole and the inner periphery thereof may be an S pole. Magnetic fluxes ф from the magnetizing body 34 function toward the two detection elements 32 and 33.

In this way, the difference between the magnetic fluxes acting on the respective detection elements 32 and 33 arranged in the axial direction, is detected as an output voltage, thereby giving a detection output. The two detection elements 32 and 33 are installed at a single installation section 31 to form the differential type detection head 30 as a whole.

According to the differential type detector head 30 thus formed, no output voltage is generated by magnetic fields of the same magnitude in the same direction. Thus, it is possible to reduce influence of the disturbing magnetic field such as earth magnetism.

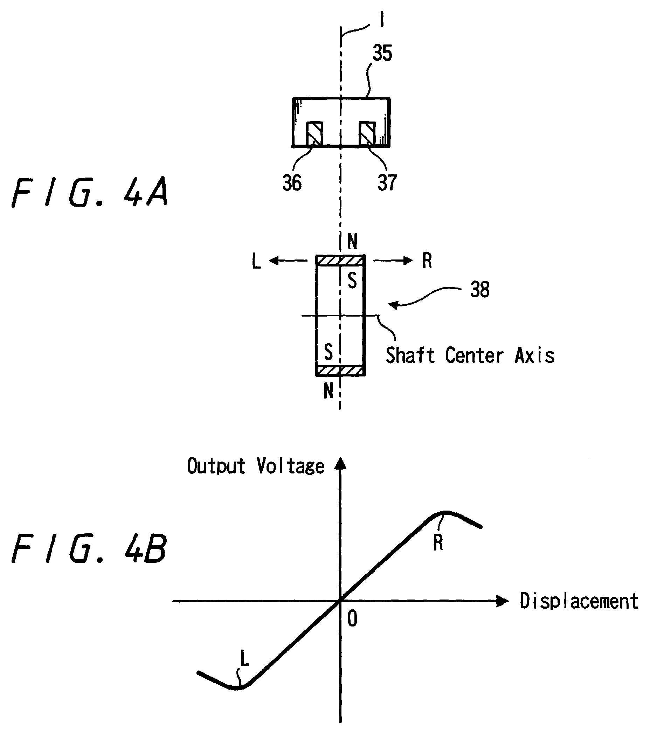

FIG. 4 shows a differential type detector head in the torque detection section in this embodiment. FIG. 4A shows the magnetizing direction and cross sections of the differential type detection head and the ring-shaped magnetizing body. FIG. 4B shows an output waveform diagram when the magnetizing body moves along the rotation axis direction of the shaft. The differential type detector head 35 shown in FIG. 4A corresponds to the torque detection sensor head section 10 shown in FIG. 1. The ring-shaped magnetizing body 38 shown in FIG. 4A corresponds to the torque detection ring-shaped magnetizing body 11 shown in FIG. 1. The magnetized portion of the ring-shaped magnetizing body 38 shown in FIG. 4A corresponds to the outer peripheral convex portion of the torque detection ring-shaped magnetizing body 11 shown in FIG. 1.

As shown in FIG. 4A, the torque detection section consists of a single differential type detector head. In FIG. 4A, the differential type detector head 35 of the torque detection section has two detection elements, i.e., a detection element (1) 36 and a detection element (2) 37 arranged at positions symmetrical about the center line of the ring-shaped magnetizing body 38 in the direction of the rotation axis of the shaft.

Referring to FIG. 4B, when the ring-shaped magnetizing body 38 moves right (R) or left (L) along the shaft rotation axis direction, the output voltage of the differential type detector head 35 corresponding to the displacement varies linearly.

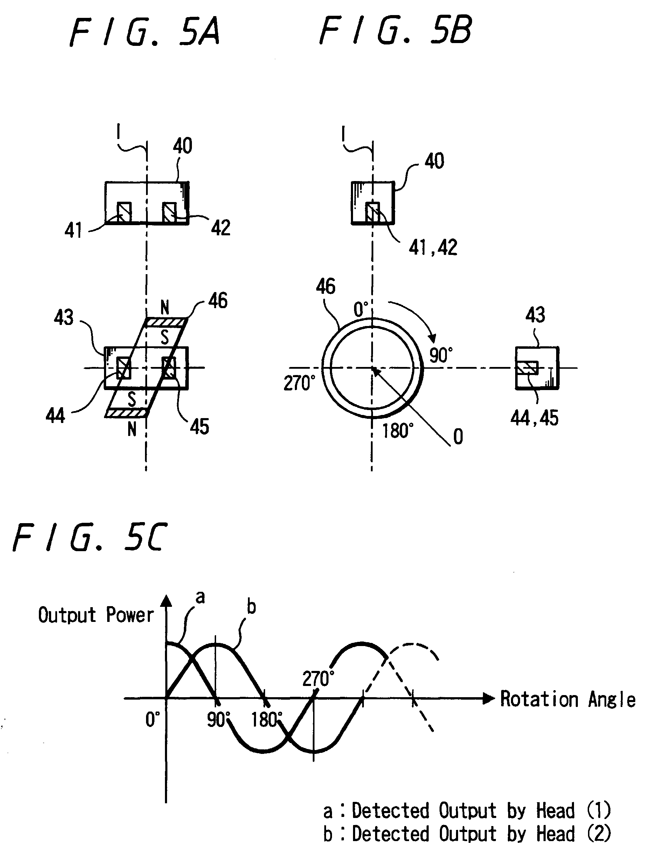

FIG. 5 shows the differential type detector head in the rotation angle detection section in this embodiment. FIG. 5A shows the magnetized direction and cross sections of a differential type detector head and an inclined ring-shaped magnetizing body. FIG. 5B is a side view showing the rotation directions of the differential type detection head and the inclined ring-shaped magnetizing body. FIG. 5C is an output waveform diagram when the magnetizing body rotates around the shaft rotation axis. The differential type detector heads 40 and 43 shown in FIGS. 5A and 5B correspond to the rotation angle detection sensor head section 7 shown in FIG. 1. The inclined ring-shaped magnetizing body 46 shown in FIGS. 5A and 5B corresponds to the rotation angle detection ring-shaped magnetizing body 6 shown in FIG. 1. The magnetized portion of the inclined ring-shaped magnetizing body 46 corresponds to the outer peripheral convex portion of the rotation angle detection ring-shaped magnetizing body 6 shown in FIG. 1.

As shown in FIGS. 5A and 5B, a rotation angle detection section consists of two differential type detector heads. As shown therein, the rotation angle detection section consists of a differential type detector head 40(1) and a differential type detector head 43(2) positioned at 0 degree and 90 degrees with respect to a shaft center O coincident with the rotation central axis of the inclined ring-shaped magnetizing body 46, respectively. The inclined ring-shaped magnetizing body 46 is of cylindrical shape having an inclined cross section and the magnetic fluxes of the body 46 change in the direction of the shaft rotation axis depending on the rotation. The inclined ring-shaped magnetizing body 46 may be designed to output a triangular waveform by causing the magnetic fluxes to linearly increase and decrease in the direction of shaft rotation axis depending on the rotation.

In FIG. 5A, the first differential type detector head 40(1) has two detection elements, i.e., a detection element (1) 41 and a detection element (2) 42 arranged at positions symmetrical about the center line I of the inclined ring-shaped magnetizing body 46 in the direction of shaft rotation axis. The second differential type detection head 43(2) has two detection elements, i.e., a detection element (1) 44 and a detection element (2) 45 arranged at positions symmetrical about the center line I of the inclined ring-shaped magnetizing body 46 in the direction of shaft rotation axis.

When the inclined ring-shaped magnetizing body 46 rotates around the shaft center O coincident with the shaft central axis, the first and second differential type detection heads 40(1) and 43(2) generate output voltages of a sine waveform with respect to the rotation angle, in which phases of their respective detection wave are shifted by 90 degrees In FIG 5C, a curve a indicates the detection output of the head 40 (1) and a curve b indicates the detection output of the head 43 (2).

[Principle of Detection]

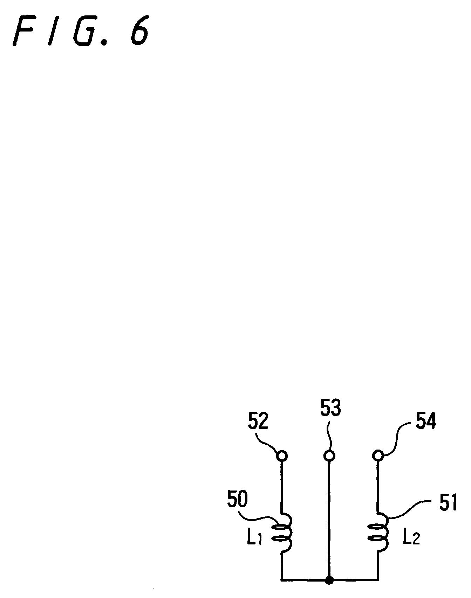

FIG. 6 is a connection diagram of detection coils in this embodiment.

In FIG. 6, one end of the detection coil L1(50) is connected to a terminal 52 and the other end thereof is connected to a terminal 53. The terminal 53 is connected to one end of the detection coil L2 (51) and the other end of the detection coil L2 (51) is connected to a terminal 54. The coils L1 (50) and L2 (52) are applied with pulse voltages of a certain cycle by an oscillation circuit described below through the terminals 52 and 53 as well as the terminals 54 and 53, respectively. As the magnetizing body moves, magnetic fluxes acting on the coils L1 (50) and L2(52) increase and decrease. Utilizing this relationship of inductance change, the detection sensor in this embodiment detects the position of the measurement object portion.

Description will now be given to the quantity of magnetic fluxes generated in the detection elements when the magnetizing body in this embodiment acts on the elements. The magnetic fluxes generated by the oscillation circuit are added in a superposing manner to the magnetic fluxes $\phi$ which affect the inside of the magnetic paths. If the magnetic fluxes $\phi$ act in the increasing direction, the coils tend to be saturated and so inductances thereof relatively decrease. Conversely, if the magnetic fluxes $\phi$ act in the decreasing direction, the coils are hard to be saturated and so inductances thereof relatively increase.

Description will now be given to the change of inductances of the detection coils in this embodiment as the magnetizing body moves.

As FIG. 3 illustrates the positional relationship between the detector head 30 and the magnetizing body 34, the detection coil L1 of the detection element 32 has the same characteristics as that of the detection coil L2 of the detection element 33. Also, the detection coil L1 of the detection element 32 and the detection coil L2 of the detection element 33 are both installed so that the magnetic fluxes ØL1 and ØL2 by the oscillation circuit described below may be generated in the same direction. The magnetizing body 34 is magnetized so that the magnetic pole appears on the detection surface. In case of FIG. 3, the magnetizing body 34 is magnetized so that detection surface may form an N pole. When the magnetizing body 34 moves in the right (R) or left (L) direction while keeping a certain gap G relative to both the detection coil L1 of the detection element 32 and the detection coil L2 of the detection element 33, the detector head 30 generates a positional signal.

When the magnetizing body 34 is positioned at the middle between the detection coil L1 of the detection element 32 and the detection coil L2 of the detection element 33, magnetic fluxes $\phi$ having the same magnitude act on each of the detection coils L1 and L2 of the detection elements 32 and 33, so that the inductances of the coils L1 and L2 are the same. If the magnetizing body 34 moves in the right (R) direction, more magnetic fluxes $\phi$ act on the side of the detection coil L2 of the detection element 33 and the inductance of the coil L2 increases. At this moment, the magnetic fluxes Ø hardly act on the detection coil L1 of the detection element 32, so that the inductance of the coil L1 decreases. Conversely, if the magnetizing body 34 moves in the left (L) direction, the inductance of the detection coil L2 of the detection element 33 decreases and the inductance of the coil L1 increases.

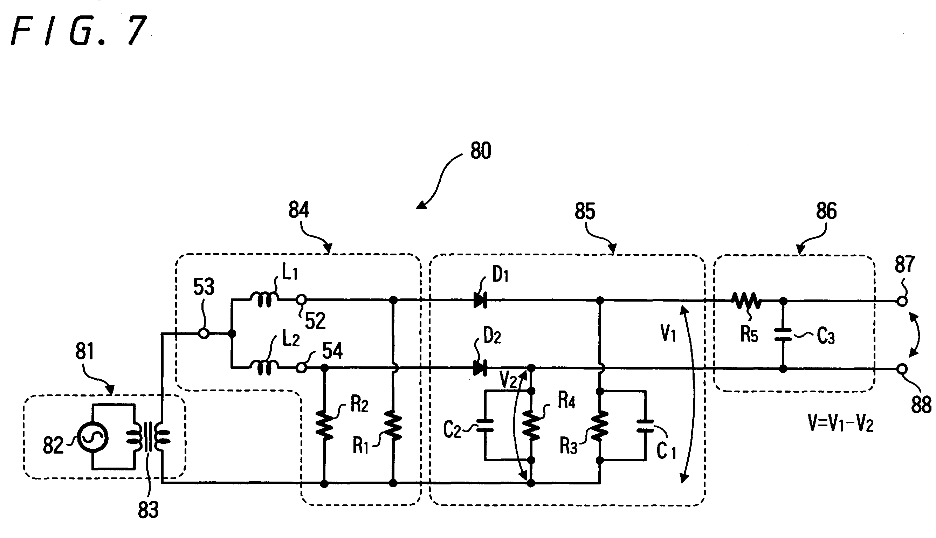

FIG. 7 is an explanatory diagram of a detector circuit in this embodiment.

In FIG. 7, a detector circuit 80 comprises a pulse voltage generator 81, a voltage divider 84, a detector circuit 85, a filter 86 and terminals 87 and 88.

The pulse voltage generator 81 includes a pulse oscillator (oscillation circuit) 82 for generating an output pulse and a transformer 83. The voltage divider 84 includes a terminal 53, a detection coil L1, a terminal 52, a detection coil L2, a terminal 54 as well as resistors R1 and R2 for dividing voltages applied to the detection coils L1 and L2. The detector circuit 85 includes diodes D1 and D2 for rectification purposes, a condenser C1 and a resistor R3 which form a detector circuit, and a condenser C2 and a resistor R4 which form a detector circuit. The filter 86 includes a condenser C3 and a resistor R5 which form a filter circuit.

The thus formed detector circuit 80 performs the following operation.

A pulse outputted from the pulse voltage generator 81 is supplied to the detection coil L1 and the resistor R1 as well as the detection coil L2 and the resistor R2 of the voltage divider 84. The pulse voltages divided by the inductance of the detection coil L1 and the resistance value of the resistor R1 as well as the inductance of the detection coil L2 and the resistance value of the resistor R2 in the voltage divider 84 are supplied to the detector circuit 85. In the detector section 85 the divided pulse voltages are rectified by the diodes D1 and D2 and then detected by the two detector circuits made of the condenser C1 and resistor R3 as well as the condenser C2 and resistor R4, respectively to form voltages V1 and V2. The detected voltages V1 and V2 are supplied to the filter 86, ripple voltages being reduced from the supplied voltages by the filter circuit made of the condenser C3 and the resistor R5, and a detection output V (= V1 - V2) being outputted from terminals 87 and 88.

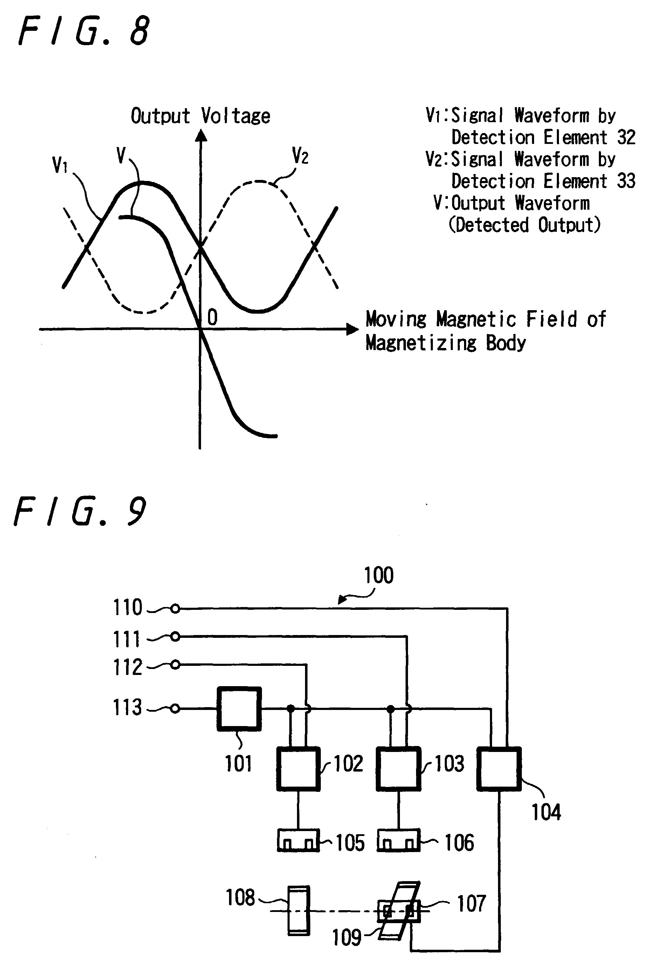

FIG. 8 is an explanatory diagram of the for differential output in this embodiment.

In FIG. 8, V1 denotes a signal waveform by the detection coil L1 of the detection element 32; V2 denotes a signal waveform by the detection coil L2 of the detection element 33; and V denotes an output waveform. As can be seen from FIG. 8, the detection output V is an output of the difference between the two detection voltages V1 and V2.

It is noted that this differential type detector head generate no output voltage for magnetic fields having the same magnitude in the same direction and is less influenced by the disturbing magnetic field such as earth magnetism.

FIG. 9 is a block diagram of a sensor circuit in this embodiment.

In FIG. 9, a sensor circuit 100 comprises a power supply 101, a torque detection circuit 102, rotation angle detection circuit 103 and 104, a torque detection head 105, rotation angle detection heads 106 and 107, a torque detection magnetizing body 108, a rotation angle detection magnetizing body 109 and terminals 110 to 113.

Each of the torque detection circuit 102, the rotation angle detection circuit 103 and the rotation angle detection circuit 104 shown in FIG. 9 corresponds to the detector circuit 80 described above and shown in FIG. 7.

The detector heads 106 and 107 shown in FIG. 9 correspond to the rotation angle detection sensor head section 7 shown in FIG. 1. The detector head 105 shown in FIG. 9 corresponds to the torque detection sensor head section 10. The rotation angle detection magnetizing body 109 shown in FIG. 9 corresponds to the rotation angle detection inclined ring-shaped magnetizing body 6 shown in FIG. 1. The torque detection magnetizing body 108 corresponds to the torque detection ring-shaped magnetizing body 11 shown in FIG. 1.

Further, the sensor circuit 100 shown in FIG. 9 is connected to the input/output cable 20 and the connector 19 through the terminals 110 to 113 provided on the circuit board 18 shown in FIG. 1.

[Improvement of Detection Accuracy by Utilizing Averaging]

Moreover, it is possible to improve detection accuracy by arranging a plurality of detection heads in the torque detection head section and averaging the outputs. Also, by arranging the heads radially in contraposition around the rotation axis, even if the eccentricity of the magnetizing body occurs, it is possible to reduce the influence thereof compared with a case of providing a single head.

To generate an A-phase detection output from the rotation detection head section, a C-phase detection head is arranged to be opposite to an A-phase detection head with respect to the rotation axis of the shaft to cause the difference between the A-phase detection output and the C-phase detection output to be produced and the resultant difference is used as a new A-phase detection output. Likewise, to generate a B-phase detection output, a D-phase detection head is arranged to be opposite to a B-phase detection head with respect to the rotation axis of the shaft to cause the difference between the B-phase detection output and the D-phase detection output to be produced and the resultant difference is used as a new B-phase detection output. By doing so, it is possible to improve detection accuracy and even if the eccentricity of the magnetizing body occurs, the influence thereof can be reduced as compared with a case of providing a single head

The rotation angle and torque detection apparatus in this embodiment comprises: the rotation angle detection inclined ring-shaped magnetizing body 6 as the first inclined ring-shaped magnetizing body to which the rotation of the shaft 1 as the measurement object portion is transmitted; the rotation angle detection sensor head section 7 as the first magnetic detection means for detecting the change of magnetic fluxes due to the rotation of the first magnetizing body; the torque detection ring-shaped magnetizing body 11 as the second ring-shaped magnetizing body to which the displacement of the measurement object portion coincident with the direction of the rotation axis of the measurement object portion due to the torsion of the measurement object portion is transmitted; the torque detection sensor head section 10 as the second magnetic detection means for detecting the change of magnetic fluxes due to the displacement of the second magnetizing body; and the cylindrical cam 5 and the direct-acting follower cylinder 12 forming as a cylindrical body for housing both the second magnetizing body and the second magnetic detection means together in a case 9 as a single housing, into which housing the measurement object portion penetrates. Therefore, the apparatus in this embodiment can detect a rotation angle and a torque in a non-contact manner. This can prevent abrasion from occurring in the detection section, which enables stable detection for a long time. Besides, due to the fact that the rotation angle detection section and so the torque detection section are contained in a single housing, there is no need to provide another case and so the apparatus can be made small in size and simple in structure. Furthermore, since the apparatus in this embodiment is hard to be influenced by oil, water, dust and the like, it can be used even in an unfavorable environment. Compared with a case of, for example, using an optical sensor, the structure for preventing intrusion of oil, water, dust and the like into the housing can be made simple, thereby allowing cost reduction. In addition, since components such as semiconductors sensitive to heat are not used in the detection section, the apparatus can be employed in a high-temperature environment in which a sensor incorporating semiconductors cannot be used, by separating the circuit section from the sensor section.

Moreover, according to the rotation angle and torque detection apparatus in this embodiment, as described above, the torque detection ring-shaped magnetizing body 11 as the second magnetizing body is formed so that, if a torsion occurs between the cylindrical cam fixed on one end of the shaft 1 as the measurement object portion and a slide guide cylinder for the direct-acting follower cylinder fixed on the other end thereof, the body 11 may move axially in proportion to the torsion. This makes it possible to detect, as the change of the axial position of the second magnetizing body, the torsion generated due to the torque of the rotation axis of the measurement object portion.

Furthermore, according to the rotation angle and torque detection apparatus in this embodiment, as described above, the rotation angle detection ring-shaped magnetizing body 6 as the first magnetizing body rotates as the shaft 1, or the measurement object portion rotates and is formed so that the magnetic field generation portion of the first magnetizing body acting on the detection plane of the rotation angle detection sensor head section 7 as the first magnetic detection means may reciprocate in the direction of the rotation axis of the measurement object section. Thus, when the magnetizing body rotates around the central axis of the measurement object portion, the first magnetic detection means can produce an output voltage of, for example, since waveform corresponding to the rotation angle of the magnetizing body.

Moreover, according to the rotation angle and torque detection apparatus in this embodiment, as described above, the rotation angle detection inclined ring-shaped magnetizing body 6 serving as the first magnetizing body and the torque detection ring-shaped magnetizing body 11 as the second magnetizing body are radially magnetized in the direction from inner periphery to outer periphery of the ring shape, respectively. Due to this design, even if the diameters of the magnetizing bodies are changed, detection characteristics do not change as long as the cross sections and detection distances of the magnetizing bodies remain unchanged. Therefore, it is possible to easily change the structure of the apparatus depending on the diameter of the measurement object portion, thereby making it possible to reduce time required for design, jointly use components of the detection section and realize cost reduction.

Furthermore, according to the rotation angle and torque detection apparatus in this embodiment, as described above, the rotation angle detection sensor head section 7 as the first magnetic detection means and the torque detection sensor head section 10 as the second magnetic detection means have respective pairs of two detection elements arranged in the direction of the rotation axis of the shaft 1 as the measurement object portion, differentially detect respective magnetic fluxes corresponding to the rotation angles and displacements of the rotation angle detection ring-shaped magnetizing body 6 as the first magnetizing body and the torque detection ring-shaped magnetizing body 11 as the second magnetizing body, and generate respective detection outputs related to a magnetic field moving in the direction of the rotation axis of the measurement object portion. Therefore, it is possible to reduce the influence of the disturbing magnetic field and besides, to simplify the structure for magnetically shielding the respective pairs of the two detection elements.

Moreover, according to the rotation angle and torque detection apparatus in this embodiment, as described above, the rotation angle detection sensor head section 7 as the first magnetic detection means and the torque detection sensor head section 10 as the second magnetic detection means are of saturable coil type. Therefore, as the magnetizing body moves, magnetic fluxes acting on the coils, namely, the inductances of the coils change. By utilizing this relationship, it is possible to detect a rotation angle and a torque based thereon from the change of the position of the measurement object portion.

Furthermore, according to the rotation angle and torque detection apparatus in this embodiment, as described above, the torque detection sensor head section 10 as the second magnetic detection means has a plurality of heads arranged radially, at equal intervals with respect to the rotation axis of the shaft 1 serving as the measurement object portion and generates an average output of sum of respective outputs. Thus, it is possible to improve detection accuracy for torque detection.

Furthermore, according to the rotation angle and torque detection apparatus in this embodiment, as described above, the rotation angle detection sensor head section 7 as the first magnetic detection means has, in order to generate an A-phase detection output, a C-phase detection head arranged at a position opposite to a A-phase detection head with respect to the rotation axis of the shaft and generate, as a new A-phase detection output, the difference between an A-phase detection output and a C-phase detection output. Likewise, the rotation angle detection sensor head section 7 has in order to generate a B-phase detection output, a D-phase detection head arranged at a position opposite to a B-phase detection head with respect to the rotation axis of the shaft and generates, as a new B-phase detection output, the difference between a B-phase detection output and a C-phase detection output. Thus, it is possible to improve detection accuracy. Besides, even if the eccentricity of the magnetizing body occurs, it is possible to reduce the influence thereof compared with a case of providing a single head.

A rotation angle and torque detection apparatus according to the present invention comprises: a first ring-shaped magnetizing body to which the rotation of a measurement object portion is transmitted; a first magnetic detection means for detecting change of magnetic fluxes due to rotation of the first magnetizing body; a conversion mechanism for converting a torsion of the measurement object portion into a linear displacement coincident with a direction of a rotation axis of the measurement object portion; a second ring-shaped magnetizing body to which a displacement of the mechanism is transmitted; a second magnetic detection means for detecting change of magnetic fluxes due to a displacement of the second magnetizing body; and a cylindrical body for housing the first magnetizing body, the first magnetic detection means, the mechanism, the second magnetizing body and the second magnetic detection means altogether in a single housing, into which housing the measurement object portion penetrates. Due to this structure, the present invention has the following advantages. The apparatus can detect a rotation angle and a torque in a non-contact manner. This can prevent abrasion from occurring in the detection section, so that it is possible to carry out stable detection for a long time. Moreover, due to the fact that the rotation angle detection section and the torque detection section are contained in a single housing, there is no need to provide another case and thereby the apparatus can be made small in size and the structure simple. Furthermore, since the apparatus is hard to be influenced by oil, water, dust and the like, it can be applied even in an unfavorable environment. Compared with a case of, for example, using an optical sensor, the structure for preventing the intrusion of oil, water, dust and the like into the housing can be made simple, thereby allowing cost reduction. Furthermore, since components weak in heat are not used in the detection section, the apparatus can be applied in a high-temperature environment in which a sensor incorporating semiconductors cannot be used, by separating the circuit section from the sensor section.

Moreover, according to the rotation angle and torque detection apparatus of the present invention, as described above, the second magnetizing body is formed so that if a torsion occurs between the cylindrical cam fixed at one end of the measurement object portion and a slide guide cylinder for the direct-acting follower cylinder fixed at the other end thereof, the second magnetizing body may move axially in proportion to the torsion. Hence, the present invention has an advantage in that it is possible to detect, as the change of the axial position of the second magnetizing body, the torsion generated due to the torque of the rotation axis of the measurement object portion.

Furthermore, according to the rotation angle and torque detection apparatus of the present invention, as described above, the first magnetizing body rotates together with the measurement object portion and is formed so that the magnetic field generation portion of the first magnetizing body acting on the detection plane of the first magnetic detection means may reciprocate in the direction of the rotation axis of the measurement object portion. Therefore, the present invention has an advantage in that when the magnetizing body rotates around the central axis of the measurement object portion, the first magnetic detection means can produce an output voltage of, for example, sine waveform corresponding to the rotation angle of the magnetizing body.

Moreover, according to the rotation angle and torque detection apparatus of the present invention, as described above, the first magnetizing body and the second magnetizing body are magnetized in the radial direction from inner periphery to outer periphery of the ring shape, respectively. Hence, the present invention has advantages in that even if the diameters of the magnetizing bodies are changed, detection characteristics do not change as long as the cross sections and detection distances of the magnetizing bodies remain unchanged, that it is possible to easily change the structure of the apparatus depending on the diameter of the measurement object portion and that it is thus possible reduce time required for design, jointly use components of the detection section and realize cost reduction.

Furthermore, according to the rotation angle and torque detection apparatus of the present invention, as described above, the first magnetic detection means and the second magnetic detection means have respective pairs of two detection elements arranged in the direction of the rotation axis of the measurement object portion differentially detect respective magnetic fluxes corresponding to the rotation angles and displacements of the first magnetizing body and the second magnetizing body, and generate detection respective outputs related to a magnetic field moving in the direction of the rotation axis of the measurement object portion. Hence, the present invention has advantages in that the influence by the disturbing magnetic field can be reduced and that the structure for magnetically shielding the respective pairs of the two detection elements can be simplified.

Also, according to the rotation angle and torque detection apparatus of the present invention, as described above, the first magnetic detection means and the second magnetic detection means are of saturable coil type. Hence, the present invention has an advantage in that as the magnetizing body moves, magnetic fluxes acting on the coils, namely, the inductances of the coils change and that by utilizing this relationship, it is possible to detect a rotation angle and a torque based thereon from the change of the position of the measurement object portion.

Moreover, according to the rotation angle and torque detection apparatus of the present invention, as described above, the second magnetic detection means has a plurality of heads arranged radially at equal intervals with respect to the rotation axis of the measurement object portion and generates an average output of sums of respective outputs. Therefore, the present invention can advantageously improve detection accuracy for torque detection.

Furthermore, according to the rotation angle and torque detection apparatus of the present invention, as described above, the first magnetic detection means has, in order to generate an A-phase detection output, a C-phase detection head arranged at a position opposite to a A-phase detection head with respect to the rotation axis of the shaft and generate, as a new A-phase detection output, the difference between an A-phase detection output and a C-phase detection output. Likewise, the first magnetic detection means has, in order to generate a B-phase detection output, a D-phase detection head arranged at a position opposite to a B-phase detection head with respect to the rotation axis of the shaft and generates, as a new B-phase detection output, the difference between a B-phase detection output and a D-phase detection output. Therefore, the present invention has an advantage in that it is possible to improve detection accuracy and that, even if the eccentricity of the magnetizing body occurs, it is possible to reduce the influence thereof compared with a case of providing a single head.

Having described preferred embodiments of the invention with reference to the accompanying drawings, it is to be understood that the invention is not limited to those precise embodiments and that various changes and modifications could be effected therein by those skilled in the art without departing from the spirit or scope of the invention as defined in the appended claims.

**Claims**

1. A rotation angle and torque detection apparatus comprising:

   a first ring-shaped magnetizing body to which a rotation of a measurement object portion is transmitted;
   a first magnetic detection means for detecting change of magnetic fluxes due to rotation of said first magnetizing body;
   a conversion mechanism for converting a torsion of said measurement object portion into a linear displacement coincident with a direction of a rotation axis of said measurement object portion;
   a second ring-shaped magnetizing body to which a displacement of said mechanism is transmitted;
   a second magnetic detection means for detecting change of magnetic fluxes due to a displacement of said second magnetizing body; and
   a cylindrical body for housing said first magnetizing body, said first magnetic detection means, said mechanism, said second magnetizing body and said second magnetic detection means altogether, said measurement object portion penetrating into said cylindrical body.

2. The rotation angle and torque detection apparatus according to claim 1, wherein said conversion mechanism for converting the torsion of said measurement object portion into the linear displacement coincident with the direction of the rotation axis of said measurement object portion is a cylindrical cam mechanism, comprising:

   a cylindrical cam fixed on one end of said measurement object portion;
   a cam groove formed in said cylindrical cam and having a cam curve being linear between a rotation angle of said cylindrical cam and a displacement of the rotation axis of said measurement object portion;
   a cylindrical slide guide fixed on the other end of said measurement object portion and having a groove in the direction of the rotation axis of said measurement target portion; and
   a direct-acting follower up reciprocating on said slide guide.

3. The rotation angle and torque detection apparatus according to claim 1 or 2, wherein said first magnetizing body rotates as said and is formed so that measurement field portion rotates a magnetic field generating portion of said first magnetizing body acting on a detection plane of said first magnetic detection means reciprocates in the direction of the rotation axis of said measurement object portion.

4.   The rotation angle and torque detection apparatus according to claim 3, wherein said first magnetizing body is of a cylindrical shape having an inclined cross section.

5.   The rotation angle and torque detection apparatus according to claim 2, 3 or 4, wherein said first magnetizing body is arranged on an outer periphery of said cylindrical cam.

6.   The rotation angle and torque detection apparatus according to claim 2, wherein said second magnetizing body is arranged on an outer periphery of said direct-acting follower.

7.   The rotation angle and torque detection apparatus according to claim 1, 2, 3, 4, 5 or 6, wherein said first magnetizing body and said second magnetizing body are radially magnetized from inner periphery to outer periphery of ring shape, respectively.

8.   The rotation angle and torque detection apparatus according to claim 1, 2, 3, 4, 5, 6 or 7, wherein said first magnetic detection means and said second magnetic detection means have respective pairs of two detection elements arranged in the direction of the rotation axis of said measurement object portion, differentially detect respective magnetic fluxes corresponding to the rotation angles and displacements of said first magnetizing body and said second magnetizing body, respectively, and generate respective detection outputs related to a magnetic field moving in the direction of the rotation axis of said measurement object portion.

9.   The rotation angle and torque detection apparatus according to claim 8, wherein said detection elements of said first magnetic detection means and of said second magnetic detection means are saturable coils.

10.  The rotation angle and torque detection apparatus according to claim 1, 2, 3, 4, 5 or 6, wherein said first magnetic detection means has, in order to generate A-phase and B-phase detection waveforms, A-phase magnetic detection means for detecting an A-phase, and B-phase magnetic detection means, for detecting a B-phase, arranged at a position of 90 degrees apart from said A-phase magnetic detection means with reference to the rotation angle of said measurement target portion,

11.  The rotation angle and torque detection apparatus according to claim 1, 2, 3, 4, 5, 6, 7, 8 or 9, wherein said second magnetic detection means have a plurality of magnetic detection elements arranged radially, at equal intervals with respect to the rotation axis of said measurement object portion and generate an average output of sum of respective outputs.

12.  The rotation angle and torque detection apparatus according to claim 10, wherein said first magnetic detection means has, in order to generate an A-phase detection waveform, and a C-phase magnetic detection means arranged at a position opposite to said A-phase magnetic detection means with respect to the rotation axis of said measurement object portion and causes an output difference between the A-phase and the C-phase to be generated, and

said first magnetic detection means has, in order to generate a B-phase detection waveform, a D-phase magnetic detection means arranged at a position opposite to said B-phase magnetic detection means with respect to the rotation axis of said measurement object portion and causes an output difference between the B-phase and the C-phase to be generated.

F I G. 1

Input Side

Output Side

EP 1 070 654 A2

# F I G. 2

# F I G. 3

*F I G. 4A*

L ←       → R

Shaft Center Axis

*F I G. 4B*

Output Voltage

Displacement

# F I G. 5A   F I G. 5B

# F I G. 5C

a : Detected Output by Head (1)
b : Detected Output by Head (2)

# F I G. 6

FIG. 7

$V = V_1 - V_2$

# F I G. 8

Output Voltage

V1:Signal Waveform by
Detection Element 32
V2:Signal Waveform by
Detection Element 33
V:Output Waveform
(Detected Output)

Moving Magnetic Field of
Magnetizing Body

# F I G. 9